(19) Europäisches Patentamt

European Patent Office

Office européen des brevets

(11) **EP 2 731 006 B1**

## (12) FASCICULE DE BREVET EUROPEEN

(45) Date de publication et mention de la délivrance du brevet:
**15.04.2015 Bulletin 2015/16**

(51) Int Cl.:
***G06F 7/72*** *(2006.01)*

(21) Numéro de dépôt: **13191662.9**

(22) Date de dépôt: **05.11.2013**

(54) **Procédé de cryptographie comprenant une opération d'exponentiation modulaire**

Kryptografieverfahren, das eine modulare Exponentierungsoperation umfasst

Cryptography method including a modular exponentiation operation

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.11.2012 FR 1260553**

(43) Date de publication de la demande:
**14.05.2014 Bulletin 2014/20**

(73) Titulaire: **Inside Secure**
**13590 Meyreuil (FR)**

(72) Inventeurs:
  • **Verneuil, Vincent**
    **13090 Aix en Provence (FR)**
  • **Clavier, Christophe**
    **87800 Rilhac Lastours (FR)**

(74) Mandataire: **de Roquemaurel, Bruno et al**
    **OMNIPAT**
    **24 Place des Martyrs de la Résistance**
    **13100 Aix en Provence (FR)**

(56) Documents cités:
• **KOC C K ED - SHON TAESHIK ET AL: "Analysis of sliding window techniques for exponentiation", COMPUTERS AND MATHEMATICS WITH APPLICATIONS, PERGAMON PRESS, OXFORD, GB, vol. 30, no. 10, 1 novembre 1995 (1995-11-01), pages 17-24, XP009096097, ISSN: 0898-1221, DOI: 10.1016/0898-1221(95)00153-P**
• **ANSARI B ET AL: "Parallel scalar multiplication for elliptic curve cryptosystems", COMMUNICATIONS, CIRCUITS AND SYSTEMS, 2005. PROCEEDINGS. 2005 INTERNAT IONAL CONFERENCE ON HONG KONG, CHINA MAY 27-30, 2005, PISCATAWAY, NJ, USA,IEEE, vol. 1, 27 mai 2005 (2005-05-27), pages 71-73, XP010827154, DOI: 10.1109/ICCCAS. 2005.1493364 ISBN: 978-0-7803-9015-7**

**Description**

La présente invention concerne un procédé de calcul itératif du résultat de l'exponentiation d'une donnée m par un exposant *d*, mis en oeuvre dans un dispositif électronique.

Divers procédés de cryptographie connus reposent sur l'opération d'exponentiation modulaire, qui a pour expression mathématique :

$m^d$ modulo(n),

m étant une donnée d'entrée, d un exposant et n un module. La fonction d'exponentiation modulaire consiste à calculer le reste de la division par n de m à la puissance d.

Une telle fonction est utilisée par divers algorithmes de cryptographie tels que l'algorithme RSA (Rivest, Shamir et Adleman), l'algorithme DSA ("Digital Signature Algorithm"), El Gamal, etc. La donnée m est généralement un message à chiffrer ou déchiffrer ou bien un message à signer ou une signature à vérifier, et l'exposant d est une clé privée ou publique.

Il est connu d'exécuter un calcul d'exponentiation modulaire au moyen de l'algorithme "Square & Multiply" ("élever au carré et multiplier") A1 ou A1' figurant en Annexe I.

L'algorithme A1 est dit "de gauche à droite" car les premières étapes de la boucle de calcul commencent par les bits de poids fort de l'exposant, pour aller vers les bits de poids faible. L'algorithme A1' est dit "de droite à gauche" car les premières étapes de la boucle de calcul commencent par les bits de poids faible de l'exposant, pour aller vers les bits de poids fort.

Ces algorithmes comprennent pour chaque itération, c'est-à-dire chaque bit de l'exposant, une multiplication de deux variables identiques de grande taille et si le bit de l'exposant traité par l'itération est égal à 1, une multiplication de deux variables différentes de grande taille. Il est généralement fait appel à des fonctions différentes pour exécuter chacune de ces opérations, la multiplication de deux variables identiques de grande taille étant exécutée au moyen d'une fonction d'élévation au carré ou fonction "CARRE", tandis que la multiplication de deux variables différentes de grande taille est exécutée au moyen d'une fonction de multiplication ou fonction "MULT". Cette distinction est due au fait qu'il est possible de calculer plus rapidement xxy lorsque x=y que dans le cas contraire, au moyen de la fonction CARRE. Le ratio entre le temps d'exécution de la fonction CARRE et le temps d'exécution de la fonction MULT est généralement de l'ordre de 0,8 mais peut varier entre 0,5 et 1 suivant la taille des nombres considérés, la façon dont la multiplication est exécutée, etc.

Dans un dispositif électronique de type carte à puce, le calcul cryptographique est généralement exécuté par un processeur spécifique, tel un coprocesseur arithmétique ou un crypto-processeur. Le calcul de "$m^d$ modulo n", et plus particulièrement l'exécution des multiplications de nombres de grande taille, occupe la majeure partie du temps de calcul du processeur relativement au temps total de calcul d'une signature, de vérification de signature, ou d'une opération de chiffrement ou de déchiffrement. Le fait d'utiliser alternativement la fonction CARRE ou la fonction MULT en fonction du type de calcul à effectuer permet donc d'optimiser le temps de calcul global de chiffrement, de déchiffrement, de signature ou de vérification de signature.

Toutefois, l'utilisation de deux fonctions différentes CARRE et MULT conduit à une fuite d'information détectable par analyse SPA ("Simple Power Analysis"), c'est-à-dire par analyse de la consommation électrique de la carte. La fonction CARRE ayant un temps d'exécution plus court que la fonction MULT, il est possible de différencier ces deux opérations en observant la courbe de consommation électrique du composant. On entend par "consommation électrique" toute grandeur physique observable trahissant le fonctionnement du composant électronique exécutant l'opération, notamment le courant électrique consommé ou le rayonnement électromagnétique du composant.

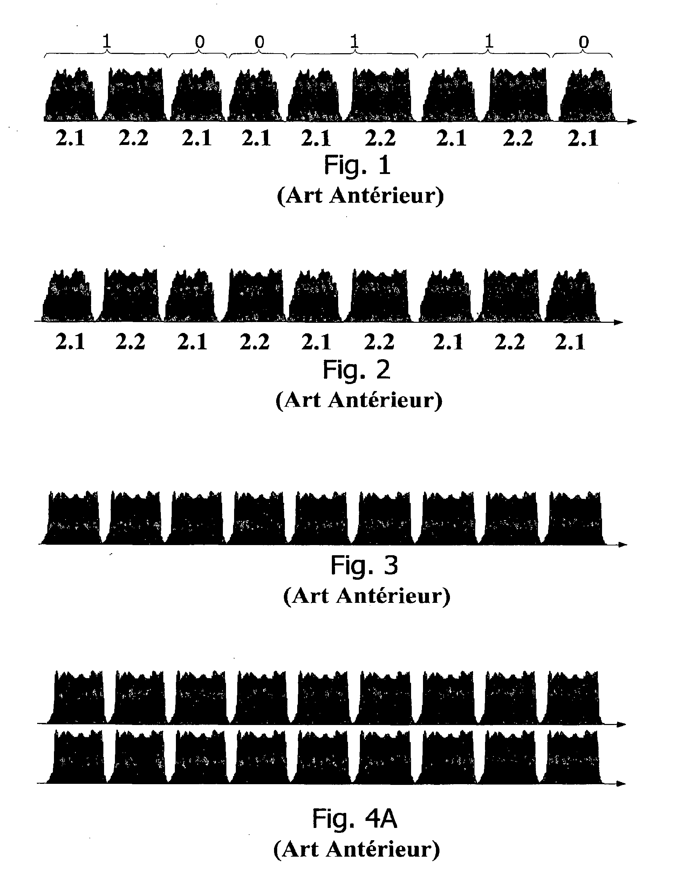

La figure 1 représente une courbe de consommation électrique d'un composant exécutant l'algorithme A1. On distingue clairement le profil de consommation de la fonction CARRE et celui de la fonction MULT. Une opération CARRE suivie d'une opération MULT (étape 2.1 suivie d'une étape 2.2) révèle que le bit de l'exposant d est égal à 1 puisque le branchement conditionnel vers l'étape 2.2 nécessite que la condition $d_s{=}1$ soit réalisée. Inversement, une opération CARRE suivie d'une autre opération CARRE (étape 2.1 suivie d'une autre étape 2.1) révèle que le bit de l'exposant est égal à 0. Les bits de l'exposant d peuvent ainsi être découverts les uns après les autres par une simple observation de la courbe de consommation électrique.

Pour pallier cet inconvénient, les étapes 2.1 et 2.2 des algorithmes A1 et A1' pourraient être effectuées au moyen de la fonction MULT uniquement, sans utiliser la fonction CARRE. Toutefois, une analyse plus fine de la consommation électrique permettrait de distinguer l'étape 2.1 de l'étape 2.2 car l'algorithme A1 ou A1' n'est pas régulier. En effet, dans ce cas, le temps s'écoulant entre deux multiplications successives n'est pas le même lorsque les deux multiplications correspondent à l'exécution successive de deux étapes 2.1 (bit de l'exposant égal à 0) ou correspondent à l'exécution d'une étape 2.1 suivie d'une étape 2.2 (bit de l'exposant égal à 1). Un attaquant pourrait ainsi "zoomer" sur la partie de la courbe de consommation s'étendant entre les multiplications et observerait une dissymétrie temporelle révélatrice du branchement conditionnel et donc de la valeur du bit de l'exposant.

L'algorithme A2 figurant en Annexe I est une variante de l'algorithme A1 qui permet de pallier cet inconvénient. L'algorithme A2 est appelé "Square & Multiply Always" ("toujours élever au carré et multiplier") car une multiplication factice (étape 2.3) utilisant un paramètre factice b est insérée après une élévation au carré lorsque le bit de l'exposant d est égal à 0, grâce à un double branchement conditionnel "si" et "sinon".

La figure 2 montre la consommation électrique d'un composant exécutant l'algorithme A2. On constate une régularité des pics de consommation correspondant à la succession des étapes 2.1 et 2.2, qui protège l'algorithme contre une attaque SPA. On suppose donc que le double branchement conditionnel "si" et "sinon" ne produit pas de fuite détectable par analyse SPA, car on ne peut pas distinguer si la condition est vraie ou fausse, puisqu'une multiplication est toujours exécutée. L'algorithme A2 est dit "régulier" puisque l'attaquant voit une succession d'étapes identiques. Il ne répond toutefois pas au principe d'atomicité.

Le principe d'atomicité a été introduit par B. Chevallier-Mames, M. Ciet et M. Joye, dans un article intitulé "Low-Cost Solutions for Preventing Simple Side-Channel Analysis: Side-Channel Atomicity", paru dans IEEE Transactions on Computers, Volume 53, Issue 6 (June 2004), Pages: 760 - 768, 2004. Il est également décrit dans la demande internationale WO 03 083 645 ou le brevet US 7 742 595.

L'application du principe d'atomicité conduit à transformer une boucle non régulière, par exemple la boucle constituée par les étapes 2.1 et 2.2 de l'algorithme A1 ou A1', en une suite régulière de multiplications, sans utiliser de multiplication factice, pour un gain de temps dans l'exécution de l'algorithme.

A titre d'exemple, l'algorithme d'exponentiation A3 figurant en Annexe I, appelé "Multiply Always", est la version atomique de l'algorithme A1. L'algorithme est parfaitement régulier en ce qu'il ne comporte que des multiplications et en ce que chaque itération de la boucle principale ne comprend qu'une seule multiplication.

La figure 3 représente la courbe de consommation électrique de l'algorithme A3 et montre la régularité des pics de consommation électrique.

Dans cet algorithme, certaines multiplications sont des multiplications de variables différentes et d'autres sont des multiplications de variables identiques. Or, dans l'article "Distinguishing Multiplications from Squaring Operations", Selected Areas in Cryptography, volume 5381 of Lecture Notes in Computer Science, pages 346-360, Springer, 2008, les auteurs F. Amiel, B. Feix, M. Tunstall, C. Whelan, et W. Marnane divulguent un procédé d'analyse à canal caché qui exploite une différence intrinsèque entre la multiplication de deux variables différentes et la multiplication de deux variables identiques (équivalente à une élévation au carré), le résultat de la seconde ayant en moyenne un poids de Hamming inférieur au résultat de la première. L'algorithme A3 est donc exposé à ce type d'attaque, car il contient des multiplications de termes différents et des multiplications de termes égaux.

L'algorithme A2 "Square & Multiply Always" n'est pas sensible à ce type d'attaque car les multiplications exécutées à l'étape 2.2 sont toutes des multiplications de variables différentes, et l'étape 2.1 est exécutée avec la fonction CARRE. Il présente toutefois l'inconvénient d'un temps d'exécution non optimisé en raison de l'exécution de multiplications factices. De plus, il existe une classe d'attaques dite "safe errors" qui permettent de détecter les opérations factices qu'un algorithme comporte. Ces attaques consistent à injecter une faute dans un calcul cryptographique à un instant particulier, et à observer si le résultat du calcul est juste ou faux. Ce type d'attaque appliqué à l'algorithme A2 permet de savoir si une multiplication est faite après un "si" ou après un "sinon". En effet, dans le second cas, le résultat de la multiplication factice n'est pas utilisé pour le calcul du résultat final. Une injection d'erreur dans une boucle dans laquelle le branchement conditionnel "sinon" est actif n'affecte donc pas le résultat et permet de savoir que le branchement conditionnel "sinon" a été retenu et non le branchement "si".

L'algorithme A4 figurant en Annexe I, appelé "Montgomery Ladder", permet également de réaliser un calcul d'exponentiation modulaire. Cet algorithme consiste à chaque itération à effectuer deux multiplications, l'une appliquée à deux nombres différents, et l'autre appliquée à deux nombres identiques et pouvant donc être effectuée par une multiplication ou une élévation au carré. A chaque itération, l'un des deux registres $R_0$, $R_1$ reçoit le produit du contenu des deux registres, et le contenu de l'autre des deux registres est élevé au carré. Si le bit $d_s$ correspondant à l'itération en cours, de l'exposant d est à 0, le registre $R_1$ reçoit le résultat de la multiplication, et le registre $R_0$ est élevé au carré, et inversement si le bit $d_s$ est à 1.

Cet algorithme présente l'avantage d'être parfaitement régulier en ce que chaque itération comporte systématiquement deux multiplications, ou une multiplication et une élévation au carré. Cet algorithme est également optimisé en terme de temps de calcul dans la mesure où il ne comporte pas d'opération factice. Cet algorithme présente également l'avantage d'être parallélisable moyennant l'utilisation d'un registre supplémentaire. L'algorithme A4' figurant en Annexe I est une variante parallélisée de l'algorithme A4. L'algorithme A4' utilise un registre supplémentaire $R_2$ (cf. étape 2.2 de l'algorithme A4' en Annexe I) pour ne pas écraser l'opérande $R_0$ ou $R_1$ de la multiplication, lors de l'opération d'élévation au carré.

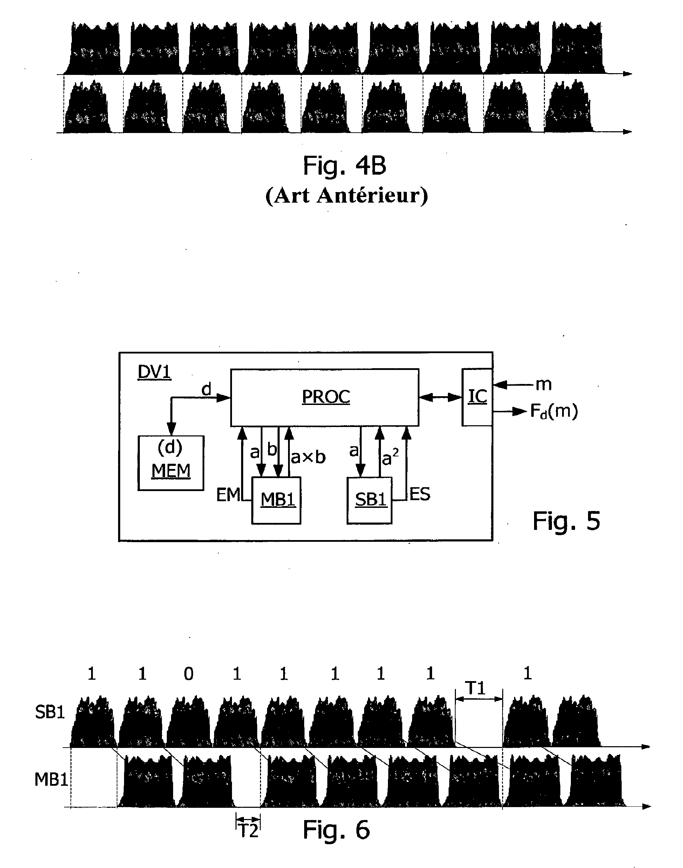

Les figures 4A et 4B représentent des courbes de consommation électrique d'un composant exécutant l'algorithme A4'. Ces courbes de consommation montrent une régularité dans la succession des pics de consommation électrique, que la seconde multiplication soit réalisée par la fonction MULT (figure 4A) ou la fonction CARRE (figure 4B).

La demande EP 2 492 804 (US2012/0221618) déposée par le Demandeur propose de remplacer dans les algorithmes A1, A1' ou A2, les opérations de multiplication par des opérations d'élévation au carré en utilisant l'une ou l'autre des formules suivantes :

$$(i) \qquad x×y = [(x+y)×(x+y) − x×x − y×y]/2$$

$$(ii) \qquad x×y = [(x+y)/2]×[(x+y)/2] − [(x-y)/2]×[(x-y)/2]$$

L'algorithme A5 figurant en Annexe I présente un exemple de calcul d'exponentiation modulaire mettant en oeuvre la formule (ii), de gauche à droite. Le fonctionnement de cet algorithme peut être compris en se référant à l'algorithme classique A1 décrit plus haut. Deux cas peuvent se produire :

1) Le bit $d_i$ de l'exposant vaut 0 :

- l'algorithme calcule $R_0 = R_0 x R_0$ (étape 3.1), ce qui correspond à l'étape 2.1 de l'algorithme A1,

2) le bit $d_i$ vaut 1, l'algorithme effectue trois itérations de la boucle "tant que" :

- $R_0 = R_0 x R_0$ (étape 3.1), ce qui correspond à l'étape 2.1 de l'algorithme A1)
- $R_2 = ((R_0+m)/2)×((R_0+m)/2)$ (étapes 3.3, 3.4, puis 3.1)
- $R_0 = ((R_0-m)/2)×((R_0-m)/2)$ et $R_0 = R_2-R_0$ (étapes 3.2, 3.4, puis 3.1), ce qui correspond à l'étape 2.2 de l'algorithme A1 mise en oeuvre avec la formule (ii)).

Le profil de consommation électrique d'un composant exécutant l'algorithme A5 se présente sous la forme d'une succession de pics correspondant à des appels à la fonction MULT (ou CARRE). Une telle courbe de consommation ne permet pas de déduire la valeur des bits de l'exposant secret et est donc protégée d'une attaque SPA. D'autre part, l'attaque consistant à distinguer une multiplication de deux variables différentes d'une multiplication de deux variables identiques n'est pas applicable puisque le procédé ne comporte que des multiplications de termes égaux.

Le temps d'exécution par itération (par bit de l'exposant d) de l'algorithme A5 peut être évalué à 2 fois le temps de calcul d'une élévation au carré, soit 1,6 fois le temps de calcul d'une multiplication.

Une variante parallélisable peut être dérivée de l'algorithme A5. Ainsi, l'algorithme A5' figurant en Annexe I présente un autre exemple de calcul d'exponentiation modulaire mettant en oeuvre la formule (ii), de droite à gauche, sous une forme atomique, parallélisée.

Le profil de consommation électrique d'un composant exécutant l'algorithme A5' se présente sous la forme d'une double succession de pics correspondant à des appels à la fonction MULT (ou CARRE). Une telle succession ne permet pas de déterminer les bits de l'exposant d.

Le temps d'exécution de cet algorithme dépend du nombre de registres mis en oeuvre, et tend vers le temps de calcul d'un carré par bit de l'exposant d, au prix de l'utilisation d'un très grand nombre L de registres de la taille de la donnée m à élever à la puissance d.

Par ailleurs, le document "Parallel scalar multiplication for elliptic curve cryptosystems", Ansari B et al., Communication, Circuits and Systems, 2005, Proceedings 2005 International Conference in Honk Kong, China, May 27-30, 2005, IEEE, Vol. 1, 27 mai 2005, p. 71-72, décrit un procédé de calcul de multiplication par un scalaire dans le domaine de la cryptographie à courbe elliptique. Ce procédé prévoit d'utiliser deux processeurs distincts pour effectuer les calculs de doublement et les additions de l'algorithme "double-and-add". Ce procédé effectue un calcul de doublement pour calculer $2^i P$ pour tous les bits du nombre scalaire à multiplier et stocke le résultat d'un calcul de doublement dans une mémoire tampon à chaque fois que le bit de rang i du nombre scalaire est non nul et si la mémoire tampon n'est pas pleine. Ce procédé effectue également une addition entre le résultat de l'addition précédente et un double stocké dans la mémoire tampon dès que celle-ci n'est pas vide.

Il pourrait donc être souhaité de réduire le temps de calcul et la taille de mémoire utilisée par un procédé d'exécution d'un calcul d'exponentiation appliqué à une donnée de grande taille. Il pourrait être également souhaité de protéger un tel procédé contre les attaques à canal caché mentionnées précédemment, en pénalisant le moins possible.le temps de calcul.

Des modes de réalisation concernent un procédé de calcul itératif d'exponentiation d'une donnée de grande taille par un exposant formé d'un certain nombre de bits, le procédé étant mis en oeuvre dans un dispositif électronique comprenant un bloc de calcul d'élévation au carré d'une variable de grande taille, un bloc de calcul de multiplication de variables de grande taille et une mémoire tampon de stockage temporaire de résultats fournis par le circuit d'élévation au carré, le procédé comprenant, des étapes consistant à : tant que la mémoire tampon n'est pas pleine de résultats non utilisés par le bloc de multiplication et si le bloc d'élévation au carré est inactif; déclencher un calcul par le bloc d'élévation au carré pour chaque bit de l'exposant, et si le bit de l'exposant correspondant est à un, stocker le résultat fourni par le bloc d'élévation au carré dans la mémoire tampon, en association avec la valeur d'un groupe d'un certain nombre de bits consécutifs suivant le bit à un de l'exposant, et mettre à zéro tous les bits du groupe dans l'exposant, tant que la mémoire tampon contient un résultat d'élévation au carré non utilisé par le bloc de multiplication et si le bloc de multiplication est inactif, déclencher un calcul de multiplication par le bloc de multiplication du résultat d'élévation au carré non utilisé par un résultat de multiplication mémorisé pour la valeur du groupe associé au résultat d'élévation au carré et mémoriser le résultat de la multiplication pour la valeur du groupe, et combiner les résultats de multiplication mémorisés pour les groupes en élevant les résultats de multiplication mémorisés à la puissance deux fois la valeur du groupe plus un et en multipliant entre eux les résultats des élévations obtenus.

Selon un mode de réalisation, le procédé comprend un déclenchement de calcul factice par le bloc d'élévation au carré, si la mémoire tampon est pleine, si le bit correspondant de l'exposant est à 1, et si le bloc d'élévation au carré est inactif.

Selon un mode de réalisation, le procédé comprend un déclenchement de calcul factice par le bloc de multiplication si la mémoire tampon est vide, et si le bloc de multiplication est inactif.

Selon un mode de réalisation, tous les résultats fournis par les blocs d'élévation au carré et de multiplication sont utilisés pour l'obtention du résultat de l'exponentiation.

Selon un mode de réalisation, plusieurs résultats fournis par le bloc d'élévation au carré, sont stockés dans la mémoire tampon.

Selon un mode de réalisation, la mémoire tampon est gérée de manière cyclique, avec un indice d'écriture, un indice de lecture et un compteur de résultats non utilisés.

Selon un mode de réalisation, la mémoire tampon est configurée pour stocker trois à cinq résultats fournis par le bloc d'élévation au carré.

Selon un mode de réalisation, les calculs réalisés par les blocs d'élévation au carré et de multiplication sont des opérations modulaires.

Des modes de réalisation concernent également un dispositif électronique comprenant un processeur configuré pour calculer une exponentiation d'une donnée de grande taille par un exposant, un bloc de calcul d'élévation au carré d'une variable de grande taille, et un bloc de calcul de multiplication de variables de grande taille. Selon un mode de réalisation, le dispositif comprend une mémoire tampon pouvant stocker plusieurs résultats fournis par le bloc d'élévation au carré, le dispositif étant configuré pour mettre en oeuvre le procédé tel que précédemment défini.

Selon un mode de réalisation, la mémoire tampon est configurée pour stocker trois à cinq résultats fournis par le bloc d'élévation au carré.

Selon un mode de réalisation, les blocs d'élévation au carré et de multiplication comprennent chacun un coprocesseur de type à unité centrale programmable, ou un coprocesseur entièrement hardware de type machine d'état, ou bien sont réalisés chacun par une tache exécutée de manière indépendante d'un programme principal, les taches et le programme principal étant exécutés par le processeur de type multi-coeur.

Des exemples de réalisation de l'invention seront décrits dans ce qui suit, à titre non limitatif en relation avec les figures jointes parmi lesquelles :

la figure 1 précédemment décrite représente la courbe de consommation électrique d'un composant exécutant un premier algorithme d'exponentiation classique,
la figure 2 précédemment décrite représente la courbe de consommation électrique d'un composant exécutant un second algorithme d'exponentiation classique,
la figure 3 précédemment décrite représente la courbe de consommation électrique d'un composant exécutant un troisième algorithme d'exponentiation classique,
les figures 4A, 4B représentent des courbes de consommation électrique d'un composant exécutant deux variantes d'un algorithme d'exponentiation classique,
la figure 5 représente un dispositif électronique mettant en oeuvre un algorithme d'exponentiation selon un mode de réalisation,
les figures 6 et 7 représentent des courbes de consommation électrique du dispositif électronique exécutant deux modes de réalisation d'un algorithme d'exponentiation,
la figure 8 représente un dispositif électronique mettant en oeuvre un algorithme d'exponentiation selon un autre mode de réalisation.

L'invention concerne un procédé de calcul cryptographique comportant des multiplications de variables identiques de grande taille et des multiplications de variables différentes de grande taille. Il est mis en oeuvre par un dispositif électronique configuré pour exécuter des calculs cryptographiques, incluant des exponentiations. Le procédé peut être un calcul d'exponentiation RSA, DSA, El Gamal, etc.

Selon un mode de réalisation, ce procédé se base sur une dérivation de l'algorithme A1', dans lequel les calculs d'élévation au carré sont effectués en utilisant une multiplication optimisée tenant compte de l'égalité des opérandes, et dans lequel les calculs de multiplication et d'élévation au carré effectués à chaque itération sont réalisés en parallèle d'une manière asynchrone. Ainsi, un nouveau calcul d'élévation au carré peut être déclenché dès qu'un précédent calcul d'élévation au carré s'est terminé, sans attendre qu'une multiplication éventuellement en cours de calcul soit terminée. De même, un nouveau calcul de multiplication peut être déclenché dès qu'un précédent calcul de multiplication s'est terminé, sans attendre qu'une élévation au carré éventuellement en cours de calcul soit terminée. De cette manière, le résultat d'une élévation au carré ou d'une multiplication peut être exploité dès qu'il est disponible.

L'algorithme A6 figurant en Annexe II est un exemple d'algorithme d'exponentiation, de droite à gauche, selon un mode de réalisation.

Dans l'algorithme A6 et dans les algorithmes décrits plus loin :

$M(a,b)$ désigne une fonction de calcul asynchrone du produit de nombres a et b de grande taille,

$S(a)$ désigne une fonction de calcul asynchrone du carré du nombre a de grande taille,

FinM() désigne une fonction fournissant un indicateur à FAUX tant qu'un calcul de produit est en cours (fonction M active) et qui passe à VRAI dès qu'un produit est disponible (fonction M inactive), et

FinS() désigne une fonction fournissant un indicateur à FAUX tant qu'un calcul d'élévation au carré est en cours (fonction S active) et qui passe à VRAI dès qu'un carré est disponible.

L'algorithme A6 utilise un ensemble de L registres R de la taille de la donnée m à élever à la puissance d. Cet ensemble peut avantageusement être géré comme une mémoire tampon de type FIFO (First In - First Out) cyclique (étapes 3.1.1.1.2 et 3.2.1.2). A cet effet, un compteur k mémorise le nombre de carrés chargés dans les registres R, non utilisés par les multiplications. Un indice d'écriture j définit le registre R dans lequel le résultat de l'élévation au carré suivante doit être chargé, et un indice de lecture i définit le registre R où se trouve l'opérande de la multiplication suivante. Dans cet algorithme, l'étape 3 est un contrôle de boucle sur le nombre v de bits de l'exposant d. Les étapes 3.1.x sont exécutées lorsqu'un calcul d'élévation au carré s'est terminé (FinS = VRAI - étape 3.1), et lorsque la mémoire tampon formée par les registres n'est pas pleine ($k \neq L$) et qu'un carré doit être chargé dans un registre R ($d_s = 1$ - étape 3.1.1.1). Un calcul d'élévation au carré (étape 3.1.1.2) est effectué pour chaque bit $d_s$ de l'exposant d, mais seuls les résultats des élévations au carré sont chargés dans l'un des registres R (étape 3.1.1.1.1) lorsque le bit $d_s$ de l'exposant en cours de traitement est égal à 1. Les étapes 3.2.1.x sont exécutées lorsqu'un calcul de produit s'est terminé (FinM = VRAI - étape 3.2) et lorsque la mémoire tampon n'est pas vide ($k \neq 0$ - étape 3.2.1). Un calcul de produit (étapes 3.2.1.1 et 4.1.1) est effectué pour chaque calcul d'élévation au carré chargé dans un registre R. Les étapes 4.x permettent d'effectuer les multiplications restantes une fois que toutes les élévations au carré nécessaires ont été effectuées. Les étapes 5.x forment une boucle d'attente de la fin du dernier calcul de multiplication ou d'élévation au carré, le dernier calcul de multiplication fournissant le résultat du calcul d'exponentiation.

Le temps d'exécution par itération de cet algorithme dépend du nombre L de registres R utilisés. Plus ce nombre est grand, plus la probabilité que tous les registres R soient pleins durant l'exécution de l'algorithme est faible, et donc plus la probabilité qu'un calcul d'élévation au carré soit retardé est faible. A partir de L=3, le temps d'exécution par itération de cet algorithme atteint sensiblement une valeur minimum égale au temps de calcul d'une élévation au carré, soit environ 0,8 fois le temps de calcul d'une multiplication. L'algorithme A6 permet donc d'atteindre les performances de l'algorithme A5' avec beaucoup moins de registres de la taille de la donnée m à élever à la puissance d.

La figure 5 représente sous forme de schéma bloc un dispositif électronique DV1 configuré pour exécuter un calcul cryptographique incluant l'algorithme A6. Le dispositif DV1 peut être un circuit intégré sur microplaquette de semi-conducteur agencé sur un support portatif comme une carte en matière plastique, l'ensemble formant une carte à puce. Le dispositif DV1 peut également être n'importe quel appareil équipé d'un processeur multi-tâche, tel qu'un téléphone mobile intelligent ("smartphone"), un lecteur multimédia, une tablette tactile, ou un ordinateur personnel. Le dispositif DV1 peut également être un composant d'un tel appareil, par exemple relié à un processeur principal de l'appareil.

Le dispositif DV1 comprend un processeur PROC, un bloc de calcul MB1 configuré pour exécuter la fonction $M(a,b)$ de multiplication de variables a, b, de grande taille un bloc de calcul SB1 configuré pour exécuter la fonction $S(a)$ d'élévation au carré d'une variable a de grande taille, une mémoire MEM et un circuit d'interface de communication IC. Le circuit d'interface IC peut être du type à contact ou sans contact, par exemple un circuit d'interface RF ou UHF fonctionnant par couplage inductif ou par couplage électrique. Les blocs de calcul MB1, SB1 peuvent comprendre chacun un coprocesseur équipé d'une unité centrale programmable, un coprocesseur entièrement hardware de type machine d'état, ou une tache ou fil d'exécution (thread) exécuté de manière indépendante d'un programme principal, notamment par un processeur multi-coeur. Les deux blocs de calcul MB1, SB1 peuvent être intégrés dans un même composant (coprocesseur ou machine d'état) s'ils peuvent fonctionner indépendamment l'un de l'autre.

De façon en soi classique, une variable est dite "de grande taille" lorsque sa taille (en nombre de bits) est supérieure à celle des registres de calcul du processeur PROC. Ce dernier effectue lui-même, sans faire appel aux blocs de calcul MB1, SB1, des multiplications de variables de petite taille, c'est-à-dire de taille inférieure ou égale à celle de ses registres de calcul, et fait appel aux blocs de calcul MB1, SB1 pour les multiplications et les élévations au carré de variables de grande taille, c'est-à-dire supérieure à la taille de ses registres de calcul. Par exemple, si la taille des registres de calcul du processeur PROC est de 32 bits, une variable de grande taille est une variable de plus de 32 bits. En cryptographie, les variables manipulées peuvent atteindre plusieurs centaines ou plusieurs milliers de bits (512, 1024, 2048, 4096 bits).

La mémoire MEM est couplée au processeur PROC et permet au dispositif DV1 de mémoriser une clé secrète d. Le processeur PROC reçoit, par l'intermédiaire du circuit d'interface IC, un message m à chiffrer ou à signer, et renvoie un message chiffré ou une signature du type $F_d(m)$, F étant une fonction de cryptographie basée sur la clé d comprenant un calcul d'exponentiation de type $m^d$ modulo(n) exécuté au moyen de l'algorithme A6. Pendant le calcul d'exponentiation, le processeur PROC fait appel aux blocs de calcul MB1, SB1, en fournissant des variables a, b au bloc de calcul MB1 qui retourne a×b, et en fournissant une variable a au bloc de calcul SB1 qui retourne $a^2$. Le bloc MB1 fournit un signal EM dans un état par exemple actif lorsqu'un résultat de multiplication est disponible, et dans un état inactif lorsqu'il est en train de calculer un produit. De même, le bloc SB1 fournit un signal ES dans un état par exemple actif lorsqu'un carré est disponible, et dans un état inactif lorsqu'il est en train d'effectuer une élévation au carré. Une partie de la mémoire MEM peut également être utilisée comme mémoire tampon pour mémoriser le contenu des registres R mentionnés dans l'algorithme A6.

La figure 6 représente un profil de consommation électrique d'un composant tel que le dispositif DV1, exécutant l'algorithme A6. Ce profil de consommation se présente sous la forme d'une double succession de pics correspondant à l'activité respective des blocs SB1 et MB1, c'est-à-dire aux appels des fonctions M() et S(). Au début de l'exécution de l'algorithme A6, aucun appel de la fonction M() ne peut être effectué tant que la fonction S() n'a pas fourni de résultat mémorisé dans un registre R, c'est-à-dire pour un bit $d_s$ égal à 1 de l'exposant d. L'activité du bloc SB1 comprend des périodes T1 durant lesquelles le bloc est inactif. Ces périodes correspondent aux périodes durant lesquelles la mémoire tampon R[L] est pleine (de résultats d'élévation au carré non utilisées par une multiplication précédente) et qu'un résultat d'élévation au carré doit être chargé dans cette mémoire tampon ($d_s$ = 1 - condition de l'étape 3.1.1. non satisfaite). L'activité du bloc MB1 comprend également des périodes T2 durant lesquelles le bloc est inactif. Ces périodes correspondent aux périodes durant lesquelles la mémoire tampon R[L] est vide (ne contient aucun résultat d'élévation au carré non utilisé par une multiplication précédente). Une analyse de l'activité des blocs SB1, MB1 peut donc permettre de déterminer la valeur de l'exposant d. Par conséquent, l'algorithme A6 est vulnérable aux attaques SPA. Cependant, l'analyse de cette activité pour en déduire l'exposant d peut être rendue plus difficile en augmentant le nombre L de registres R.

L'algorithme A7 figurant en Annexe II est un autre exemple d'algorithme d'exponentiation, de droite à gauche, selon un mode de réalisation. Cet algorithme qui peut être mis en oeuvre dans le dispositif DV1, diffère de l'algorithme A6 en ce qu'il comporte des opérations factices permettant de neutraliser les attaques SPA. Ces opérations factices figurent aux étapes 3.1.2.1 et 3.2.2.1 où le résultat S(b) d'une élévation au carré factice et le résultat M(a,b) d'une multiplication factice sont chargés dans un registre x quelconque. Il en résulte que les profils de consommation électrique des blocs SB1, MB1 ne comportent plus de périodes d'inactivité T1, T2. Ces profils ne permettent donc pas de déterminer les bits de l'exposant d. Cependant, ce résultat est obtenu au prix de l'ajout d'opérations factices et donc d'une augmentation du temps d'exécution de l'exponentiation. Ici encore, une augmentation du nombre L de registres R peut permettre de diminuer le nombre d'opérations factices à exécuter, en particulier le nombre d'élévations au carré factices.

L'algorithme A8 figurant en Annexe II est une version atomisée, selon un mode de réalisation, de l'algorithme A7. Cet algorithme qui peut également être mis en oeuvre dans le dispositif DV1, diffère de l'algorithme A7 en ce que tous les branchements conditionnels ont été remplacés par une matrice binaire $Q_L$ de 4(L+1) lignes et 3 colonnes (L étant le nombre de registres R), qui définit les opérations à réaliser à chaque itération. Par ailleurs, les étapes 4.x ont été intégrées dans la boucle formée par les étapes 3.x, le test de fin de boucle (étape 3) étant modifié de manière à inclure le cas traité par les étapes 4.x de l'algorithme A6 ou A7, c'est-à-dire lorsqu'une élévation au carré a été effectuée pour chacun des bits de l'exposant d et qu'il reste des carrés non utilisés par les multiplications dans les registres R. L'algorithme A8 calcule à l'étape 3.3 un indice de ligne g de lecture de la matrice $Q_L$ en utilisant une fonction pos(x) qui retourne 1 si x>0 et sinon 0. La valeur de l'indice de ligne g dépend du numéro s du bit $d_s$ en cours de traitement de l'exposant d, de la valeur de ce bit $d_s$, du nombre k de carrés non utilisés dans les registres R, et du nombre L de registres R. Cet algorithme utilise également deux paires de registres a[0], a[1], b[0], b[1] en remplacement des registres a et b, les registres a[0] et b[0] étant prévus pour recevoir le résultat des calculs factices d'élévation au carré et de multiplication, et les registres a[1] et b[1] les résultats des calculs non factices.

Il peut être noté que l'algorithme A8 continue à effectuer des élévations au carré une fois que tous les bits $d_s$ de l'exposant d ont été traités, tant qu'il reste des carrés non utilisés dans les registres R. Toutefois, ces élévations au carré supplémentaires ne pénalisent pas le temps global d'exécution du calcul d'exponentiation étant donné qu'elles sont réalisées en même temps que des multiplications nécessaires au calcul d'exponentiation.

Le contenu de la matrice $Q_L$ dépend du mode de calcul de l'indice de ligne g calculé à l'étape 3.3. Dans l'exemple du calcul de l'indice de ligne g effectué à l'étape 3.3 de l'algorithme A8, le contenu et la taille de la matrice $Q_L$ dépend de la valeur du nombre L de registres R. L'Annexe III fournit les valeurs de la matrice $Q_L$ pour L égal à 1, 2 et 3. La matrice $Q_2$ (L = 2) est construite à partir de la matrice $Q_1$ (L = 1) en ajoutant à cette dernière à la troisième ligne en partant des première et dernière lignes de la matrice, les deux blocs de deux lignes (0,1,1 / 1,1,1) et (0,0,1 / 0,0,1) indiqués en gras dans la matrice $Q_2$ fournie en Annexe III. La matrice $Q_3$ est construite à partir de la matrice $Q_2$ en dupliquant les blocs de deux lignes ajoutés dans la matrice $Q_2$, à la troisième ligne en partant de la première ligne et de la dernière ligne. Les lignes ainsi ajoutées sont indiquées en gras dans la matrice $Q_3$ fournie en Annexe III. De même, la matrice $Q_L$ (L>1) est construite en ajoutant à la troisième ligne à partir des première et dernière lignes de la matrice $Q_1$, respectivement (L-1) fois les deux blocs (0,1,1 / 1,1,1) et (0.0,1/0,0,1).

D'autres formules de calcul de l'indice de ligne pour lire la matrice $Q_L$ peuvent être aisément imaginées. Ainsi, si l'on initialise l'indice g (à l'étape 1) tel que g= $4*(1-d_s)+d_s+2$ (= $6-3d_s$), et que l'on choisit pour le calcul des indices g suivants, la formule suivante :

$$g = pos(v-s) * [4*(1-d_s) + d_s + 2*pos(L-k)] + pos(k) \qquad (1)$$

on obtient la matrice référencée Q, fournie en Annexe IV. Il peut être noté que la matrice Q est indépendante du nombre L de registres R et présente une taille fixe de 8 lignes et 3 colonnes.

L'algorithme A9 figurant en Annexe II est une version dérivée de l'algorithme A6 avec application d'une fenêtre glissante de 2 bits sur l'exposant d, selon un mode de réalisation. En d'autres termes, l'algorithme A9 est obtenu en modifiant l'algorithme A6 de manière à traiter à chaque itération non pas un, mais deux bits consécutifs de l'exposant d. Plus précisément, l'algorithme A9 réalise une seule multiplication par groupe de deux bits consécutifs de l'exposant d commençant par un bit à 1, et réalise finalement une élévation au carré et deux multiplications.

L'algorithme A9 peut être facilement adapté à l'algorithme A7 ou A8. Ainsi, l'algorithme A10 est dérivé de l'algorithme A9 en lui ajoutant des étapes 3.1.2, 3.1.2.1, 3.2.2 et 3.2.2.1 de réalisation d'un calcul de carré ou d'une multiplication factice lorsque le circuit de calcul de carré ou de multiplication est inutilisé et qu'aucun calcul de carré ou de multiplication n'est en attente de réalisation.

L'algorithme A9 peut être aisément modifié pour traiter les bits de l'exposant d par groupes de plus de deux bits. Ainsi l'algorithme A11 est dérivé de l'algorithme A9 pour mettre en oeuvre une fenêtre glissante de w bits de large. Cet algorithme utilise un tableau de $2^{w-1}$ registres pour recevoir les produits résultant des multiplications en fonction des valeurs des groupes de bits de l'exposant rencontrés. L'algorithme A11 effectue une seule multiplication par groupe de bits consécutifs commençant par un bit à un. Plusieurs élévations au carré et plusieurs multiplications seront nécessaires à la fin de l'algorithme pour déterminer le résultat de l'exponentiation. A cet effet, chaque produit obtenu en fonction d'une valeur de groupe est élevé à la puissance deux fois la valeur du groupe plus un, et les résultats des élévations sont multipliés entre eux pour obtenir le résultat de l'exponentiation. Il peut donc en résulter une réduction du nombre de multiplications de nombres de grande taille, en particulier lorsque les groupes de bits de l'exposant considérés comportent plusieurs bits à un. Cette réduction du nombre de multiplications nécessite l'utilisation de $2^{w-1}$ registres supplémentaires de grande taille, w étant le nombre de bits par groupe de bits de l'exposant.

Bien entendu, une version robuste aux attaques SPA de l'algorithme A11 peut être dérivée d'une manière analogue de l'un ou l'autre des algorithmes A7 et A8.

Le résultat du calcul d'exponentiation fourni par le processeur PROC peut être modulaire ou non modulaire. Le dispositif DV1 représenté sur la figure 5 réalise des opérations d'exponentiation non modulaires. Les blocs MB1 et SB1 du dispositif DV1 réalisent des opérations d'élévation au carré et de multiplication non modulaires. Par ailleurs, il peut être noté que les algorithmes A6, A7, A8 ne nécessitent pas d'être modifiés pour obtenir un résultat d'exponentiation modulaire ou non modulaire, seuls les blocs de calcul MB1 et SB1 devant être adaptés à cet effet.

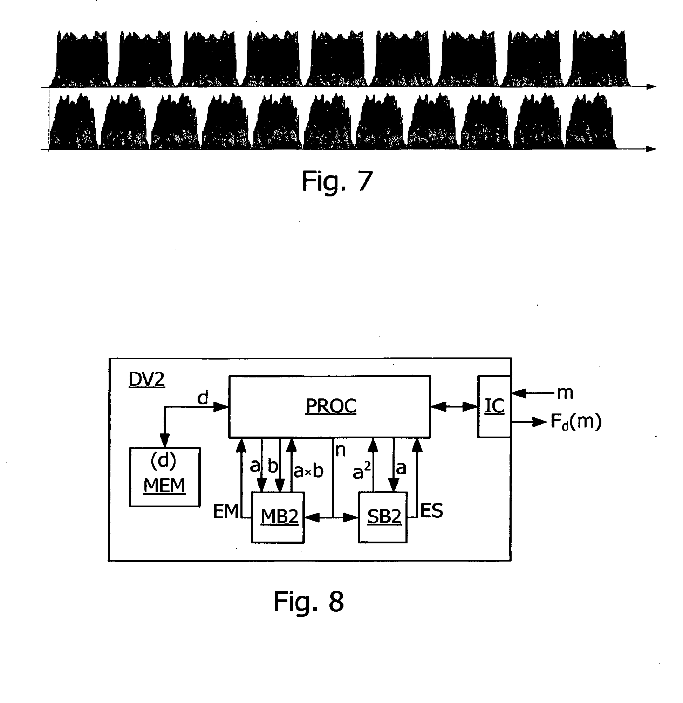

La figure 8 représente un dispositif DV2 réalisant des exponentiations modulaires. A cet effet, le dispositif DV2 diffère du dispositif DV1 en ce qu'il comprend des blocs de multiplication MB2 et d'élévation au carré SB2 réalisant des calculs modulaires. Les blocs MB2, SB2 comprennent une entrée supplémentaire pour recevoir le module n des calculs modulaires. Le processeur PROC est alors configuré pour fournir une valeur du module n aux blocs MB2, SB2. Le message m à élever à la puissance d est alors inférieur au module n.

Les temps d'exécution par bit de l'exposant d et le nombre de registres utilisés pour chacun des algorithmes A1 à A8 précédemment présentés sont rassemblés dans le tableau 1 suivant :

Tableau 1

| Algorithme | Sécurisé SPA | Temps d'exécution par bit de l'exposant d | Nombre de registres |
|---|---|---|---|
| A1, A1' | NON | $\approx$ 1S+0.5M = 1.30M | 2 |
| A2 | OUI | = 1S+1M = 1.80M | 2 |
| A3 | OUI | $\approx$ 1.5M | 2 |
| A4 | OUI | $\approx$ 1M+1S = 1,80M | 2 |
| A4' | OUI | $\approx$ 1M | 3 |
| A5 | OUI | $\approx$ 2S = 1.60M | 3 |
| A5' | OUI | $\approx$ 7/6S $\approx$ 0,93M | 5 (L = 1) |
| A5' | OUI | $\approx$ 15/14S $\approx$ 0,86M | 7 (L = 3) |
| A6 | NON | $\approx$ 0.80M | 3 (L = 1) |
| A7 | OUI | $\approx$ 0,84M | 4 (L = 1) |
| A7 | OUI | $\approx$ 0,80M | 6 (L = 3) |
| A8 | OUI | $\approx$ 0,84M | 5 (L = 1) |
| A8 | OUI | $\approx$ 0,80M | 7 (L = 3) |

Il ressort du tableau 1 que seuls les algorithmes A5' à A8 atteignent un temps de calcul par bit de l'exposant, inférieur au temps de calcul M d'une multiplication de nombres de grande taille. Par ailleurs, les algorithmes A6, A7 et A8 permettent d'atteindre un temps de calcul sensiblement égal à celui d'une élévation au carré d'un nombre de grande taille (S $\approx$ 0,8M) par bit de l'exposant d, avec un nombre de registres notablement plus faible que l'algorithme A5'.

Il apparaîtra clairement à l'homme de l'art que la présente invention est susceptible de diverses variantes de réalisation et diverses applications. En particulier, des multiplications factices, notamment au démarrage d'un calcul d'exponentiation, peuvent être réalisées sans effectuer d'élévations au carré factices (suppression des étapes 3.1.2 et 3.1.2.1 dans l'algorithme A7). Inversement, des élévations au carré factices peuvent être réalisées sans effectuer de multiplications factices (suppression des étapes 3.2.2, et 3.2.2.1 dans l'algorithme A7). D'autres modes de gestion des registres R(L) peuvent être mis en oeuvre dans les algorithmes A6, A7 et A8. Par exemple ces registres peuvent être utilisés en prévoyant des étapes telles que 2.1.1.4, 2.1.2.3 et 2.2.2.1 de l'algorithme A5', pour décaler le contenu de ces reg istres.

ANNEXE I (Faisant partie intégrante de la description)

**Algorithme A1 Exponentiation "Square & Multiply", de gauche à droite"**

**Entrée :** *un message m et un module n entiers tels que m < n*
*un exposant d entier de v bits tel que d = ($d_{v-1}$ $d_{v-2}$.... $d_0$)$_2$*
**Requiert :** *un registre a de la taille du message m*
**Sortie** : *$m^d$ modulo n*

**Étape 1 :** a = 1
**Étape 2 :** pour s allant de v-1 à 0 faire :

**Étape 2.1 :** a = ($a^2$) mod n          (CARRE)
**Étape 2.2 :** si $d_s$= 1 alors a = (a$\times$m) mod n          (MULT)

**Étape 3 :** Retourner a

**Algorithme A1'- Exponentiation "Square & Multiply, de droite à gauche"**

**Entrée :** *un message m et un module n entiers tels que m < n*
*un exposant d entier de v bits tel que d = (d$_{v-1}$ d$_{v-2}$.... d$_0$)$_2$*
**Requiert :** *deux registres a et b de la taille du message m*
**Sortie :** *m$^d$ modulo n*

**Étape1:**a=1;b=m
**Étape 2 :** pour s allant de 0 à v-1 faire :

    **Étape 2.1 :** si d$_s$ = 1 alors a = (a×b) mod n      (MULT)
    **Étape 2.2 :** b = (b$^2$) mod n     (CARRE)

**Étape 3 :** Retourner a

### Algorithme A2 - Exponentiation "Square 8 Multiply Alwavs", de gauche à droite

**Entrée :** *un message m et un module n entiers tels que m < n*
*un exposant d entier de v bits tel que d = (d$_{v-1}$ dv$_{-2}$.... d$_0$)$_2$*
**Requiert :** *deux registres a et b de la taille du message m*
**Sortie** *: m$^d$ modulo n*

**Étape1 :** a = 1, b = 1
**Étape 2 :** pour s allant de v-1 à 0 faire :

    **Étape 2.1 :** a = (a$^2$) mod n     (CARRE)
    **Étape 2.2 :** si d$_{v-s}$ = 1 alors a = (a×m) mod n     (MULT)
    **Étape 2.3 :** sinon b = (a×m) mod n     (MULT)

**Étape 3 :** Retourner a

### Algorithme A3 -"Multiply Alwavs", de gauche à droite, version atomique

**Entrée :** *un message m et un module n entiers tels que m < n*
*un exposant d entier de v bits tel que d = (d$_{v-1}$ d$_{v-2}$.... d$_0$)$_2$*
**Requiert :** *deux registres R$_0$ et R$_1$ de la taille du message m*
**Sortie** *: m$^d$ modulo n*

**Étape 1 :** R$_0$ = 1, R$_1$ = m, s = v-1, k = 0
**Étape 2 : tant que** s $\geq$ *0* **faire :**

    **Étape 2.1 :** R$_0$ = R$_0$×R$_k$ mod n     (MULT)
    **Étape 2.2 :** k = k $\oplus$ d$_s$; s = s-1+k

**Étape 3 :** Retourner R$_0$

L'opération "a $\oplus$ b" désigne le OU Exclusif bit à bit des variables a et b.

### Algorithme A4 - Montgomery Ladder (de gauche à droite)

**Entrée :** *un message m et un module n entiers tels que m < n*
*un exposant d entier de v bits tel que d = (d$_{v-1}$ d$_{v-2}$.... d$_0$)$_2$*
**Requiert :** *deux registres R$_0$ et R$_1$ de la taille du message m*
**Sortie :** *m$^d$ modulo n*

**Étape 1 :** $R_0 = 1$, $R_1 = m$
**Étape 2 :** pour s allant de v-1 à 0 faire:

**Étape 2.1 :** $b = d_s$
**Étape 2.2 :** $R_{1-b} = R_0 \times R_1$ mod n       (MULT)
**Étape 2.3 :** $R_b = (R_b)^2$ mod n       (CARRE)

**Étape 3 :** Retourner $R_0$

**Algorithme A4' - Montgomery Ladder, version parallélisée**

**Entrée :** *un message m et un module n entiers tels que m < n*
*un exposant d entier de v bits tel que d = $(d_{v-1}\ d_{v-2}.... d_0)$2*
**Requiert :** *trois registres $R_0$, $R_1$ et $R_2$ de la taille du message m*
*Sortie : $m^d$ modulo n*

**Étape 1 :** $R_0 = 1$, $R_1 = m$
**Étape 2 :** pour s allant de v-1 à 0 faire:

**Étape 2.1 :** $b = d_s$
**Étape 2.2 :** $R_{1-b} = R_0 \times R_1$ mod n II $R_2 = (R_b)^2$ mod n       (MULT||CARRE)
**Etape 2.3 :** $R_b = R_2$

**Étape 3 :** Retourner $R_0$

(le symbole II sépare des opérations effectuées en parallèle)

**Algorithme A5 - "Square always" avec (ii), de gauche à droite,**

**Entrée :** *un message m et un module n entiers tels que m < n*
*un exposant d entier de v bits tel que d = $(d_{v-1}\ d_{v-2}.... d_0)_2$*
**Requiert :** *trois registres $R_0\ R_1\ R_2$ de la taille du message m*
**Sortie :** *$m^d$ modulo n*

**Étape 1 :** pro = 1 ; $R_1 = m$ mod n ; $R_2 = 1$
**Étape2:** u=0; s=2; w=2; t=0; i=v-1; j=1
**Étape 3 :** tant que $i \geq 0$ faire :

**Étape 3.1 :** $R_u = (R_u)^2$ mod n       5CARRE)
**Étape 3.2 :** si w = 0 alors $R_w = (R_t - R_j)$ mod n
**Étape 3.3 :** sinon $R_w = (R_t + R_j)$ mod n
**Étape 3.4 :** $R_s = R_s/2$ mod n
**Étape3.5:** t=u; j=(t+1)mod3; u=w*$d_i$
**Étape 3.6 :** s = (u+2) mod 4 ; w = t⊕s
**Étape 3.7 :** i = i-(w»1)

**Étape 4 :** Retourner $R_0$

L'opération a»b désigne le décalage à droite de la variable a de b bits L'opération a*b désigne la multiplication de variables de petite taille, qui est exécutée sans faire appel faire appel à un bloc de multiplication ou d'élévation au carré.

**Algorithme A5' - "Square always" avec (ii), de droite à gauche, parallélisé**

**Entrée :** *un message m et un module n entiers tels que m < n*
*un exposant d entier de v bits tel que d = (d$_{v-1}$ d$_{v-2}$.... d$_0$)$_2$*
**Requiert :** *L+4 registres de la taille du message m : a, R$_0$, R$_1$, ... R$_{L+2}$*
**Sortie :** *m$^d$ modulo n*

**Étape 1:**a=1; R$_1$=m; k=0
**Étape 2 :** pour s allant de 0 à v-1 faire :

 **Étape 2.1 :** si d$_s$ = 1 alors

  **Étape 2.1.1 :** si k < L alors

   **Étape 2.1.1.1 :** R$_0$ = (a-R$_1$)$^2$ mod n || R$_{k+2}$ = (R$_{k+1}$)$^2$ mod n
   **Étape 2.1.1.2 :** a = (a+R$_1$)$^2$ mod n || R$_{k+3}$ = (R$_{k+2}$)$^2$ mod n
   **Étape 2.1.1.3 :** a = (a-R$_0$)/4 mod n
   **Étape 2.1.1.4 :** (R$_1$, R$_2$, ... R$_{L+1}$) = (R$_2$, R$_3$, ... R$_{L+2}$)
   **Étape 2.1.1.5 :** k = k+1

  **Étape 2.1.2 :** sinon

   **Étape 2.1.2.1 :** R$_0$ = (a-R1)$^2$ mod n || a (a+R$_1$)$^2$ mod n
   **Étape 2.1.2.2 :** a = (a-R$_0$)/4 mod n
   **Étape 2.1.2.3 :** (R$_1$, R$_2$, ... R$_{L+1}$) = (R$_2$, R$_3$, ... R$_{L+2}$)
   **Étape 2.1.2.4 :** k = k-1

 **Étape 2.2 :** sinon

  **Étape 2.2.1 :** si k = 0 alors

   **Étape 2.2.1.1 :** R$_1$ = (R$_1$)$^2$ mod n

  **Étape 2.2.2 :** sinon

   **Étape 2.2.2.1 :** (R$_1$, R$_2$, ... R$_{L+1}$) = (R$_2$, R$_3$, ... R$_{L+2}$)
   **Étape 2.2.2.2 :** k = k-1

 **Étape 3 :** Retourner a

**ANNEXE II** (Faisant partie intégrante de la description)

**Algorithme A6 - "Square & Multiply", parallélisé, de droite à gauche**

**Entrée :** *un message m entier*
*un exposant d entier de v bits tel que d = (d$_{v-1}$ d$_{v-2}$.... d$_0$)$_2$*
**Requiert :** deux registres a et b *de la taille du message m*, et
*L registres R de la taille du message m : R[0] à R[L-1], avec L $\geq$ 1*
**Sortie :** *m$^d$*

**Étape 1:** a = 1 ; b = m; s = 0
**Étape 2 :** i,j,k = 0,0,0
**Étape 3 :** Tant que s < v faire :

 **Étape 3.1 :** Si FinS() alors :

  **Étape 3.1.1 :** Si d$_s$ = 0 OU k $\neq$ L alors :

**Étape 3.1.1.1 :** Si $d_s$ = 1

**Étape 3.1.1.1.1 :** R[j] = b
**Étape 3.1.1.1.2 :** j = j+1 mod L
**Étape 3.1.1.1.3:** k = k+1

**Étape 3.1.1.2 :** b = S(b)          (CARRE)
**Étape 3.1.1.3 :** s = s+1

**Étape 3.2 :** Si FinM() alors :

**Étape 3.2.1 :** Si k ≠ 0 alors :

**Étape 3.2.1.1 :** a = M(a,R[i])          (MULT)
**Étape 3.2.1.2 :** i = i+1 mod L
**Étape 3.2.1.3 :** k = k-1

**Étape 4 :** Tant que k ≠ 0 faire :

**Étape 4.1 :** Si FinM() alors :

**Étape 4.1.1 :** a = M(a,R[i])          (MULT)
**Étape 4.1.2 :** i = i+1 mod L
**Étape 4.1.3 :** k = k-1

**Étape 5 :** Tant que FinS() = FAUX OU FinM() = FAUX faire :

**Étape 5.1 :** RIEN

**Étape 6 :** Retourner a

**<u>Algorithme A7 - "Square & Multiply", parallélisé, de droite à gauche, avec opérations factices</u>**

**Entrée :** *un message m entiers*
*un exposant d entier de v bits tel que d = ($d_{v-1}$ $d_{v-2}$.... $d_0$)$_2$*
**Requiert :** trois registres a, b et x de *la taille du message m*, et
*L registres R de la taille du message m : R[0] à R[L-1], avec L ≥ 1*
**Sortie :** *$m^d$*

**Étape 1:**a=1; b=m; s=0
**Étape 2 :** i,j,k = 0,0,0
**Étape 3 :** Tant que s < v faire :

**Étape 3.1 :** Si FinS() alors :

**Étape 3.1.1 :** Si $d_s$ = 0 OU k ≠ L alors :

**Étape 3.1.1.1 :** Si $d_s$ = 1

**Étape 3.1.1.1.1 :** R[j] = b
**Étape 3.1.1.1.2 :** j = j+1 mod L
**Étape 3.1.1.1.3 :** k = k+1

**Étape 3.1.1.2 :** b = S(b)          (CARRE)
**Étape 3.1.1.3:** s = s+1

**Étape 3.1.2 :** Sinon faire :

**Étape 3.1.2.1 :** x = S(b)

**Étape 3.2 :** Si FinM() alors :

**Étape 3.2.1 :** Si k ≠ 0 alors :

**Étape 3.2.1.1 :** a = M(a,R[i])
**Étape 3.2.1.2 :** i = i+1 mod L
**Étape 3.2.1.3 :** k = k-1

**Étape 3.2.2 :** Sinon faire :

**Étape 3.2.2.1 :** x = M(a,R[i])　　　(MULT)

**Étape 4 :** Tant que k ≠ 0 faire :

**Étape 4.1 :** Si FinM() alors :

**Étape 4.1.1 :** a = M(a,R[i])　　　(MULT)
**Étape 4.1.2 :** i = i+1 mod L
**Étape 4.1.3:** k = k-1

**Étape 5 :** Tant que FinS() = FAUX OU FinM() = FAUX faire :

**Étape 5.1 :** RIEN

**Étape 6 :** Retourner a

**Algorithme A8 - "Square & Multiply", parallélisé, de droite à gauche, version atomique**

**Entrée :** *un message m entier*
*un exposant d entier de v bits tel que d = ($d_{v-1}$ $d_{v-2}$.... $d_0$)$_2$*
**Requiert :** *L registres de la taille du message m : R[0] à R[L-1], avec L ≥ 1*
2 registres *de la taille du message m :* a[0] et a[1]
2 registres *de la taille du message m :* b[0] et b[1]
une matrice $Q_L$ de 4(L+1) lignes et 3 colonnes de bits
**Sortie :** *$m^d$*

**Étape 1 :** a[1] = 1 ; b[1] = m ; s = 0; g = $d_s$
**Étape 2 :** i,j,k = 0,0,0
**Étape 3 :** Tant que s < v OU k ≠ 0 faire :

**Étape 3.1 :** Si FinS() alors :

**Étape 3.1.1 :** R[j] = $Q_L$[g,0]*b[1] + (1-$Q_L$[g,0])*R[j]
**Étape 3.1.2 :** j = j+$Q_L$[g,0] mod L
**Étape 3.1.3 :** k = k+$Q_L$[g,0]
**Étape 3.1.4 :** b[$Q_L$[g,1]] = S(b[1])　　　(CARRE)
**Étape 3.1.5 :** s = s+$Q_L$[g,1]

**Étape 3.2 :** Si FinM() alors :

**Étape 3.2.1 :** a[$Q_L$[g,2]] = M(a[1],R[i])　　　(MULT)
**Étape 3.2.2 :** i = i+$Q_L$[g,2] mod L

**Étape 3.2.3 :** $k = k-Q_L[g,2]$

**Étape 3.3 :** $g = (1-pos(v-s))*2(L+1) + 2*k + pos(v-s)*d_s$

**Étape 4 :** Tant que FinS() = FAUX OU FinM() = FAUX faire :

**Étape 4.1 :** RIEN

**Étape 5 :** Retourner a[1]

**Algorithme A9 - "Square & Multiply ", parallélisé, de droite à gauche, avec fenêtre glissante de 2 bits**

**Entrée :** *un message m entier un exposant d entier de v+1 bits tel que d = (0 $d_{v-1}$ $d_{v-2}$.... $d_0$)$_2$ (avec $d_v$=0)*
**Requiert :** trois registres a[0], a[1] et b *de la taille du message m,* et L registres R de la taille du message m : R[0]
à R[L-1], avec L $\geq$ 1 H un tableau de L bits
**Sortie :** $m^d$

**Étape 1 :** a[0]=1 ; a[1] =1 ; b=m; s=0
**Étape 2 :** i,j,k = 0,0,0
**Étape 3 :** Tant que s < v faire :

**Étape 3.1 :** Si FinS() alors :

**Étape 3.1.1 :** Si $d_s$ = 0 OU k $\neq$ L alors :

**Étape 3.1.1.1 :** Si $d_s$ = 1

**Étape 3.1.1.1.1 :** R[j] = b
**Étape 3.1.1.1.2 :** H[j] = $d_{s+1}$
**Étape 3.1.1.1.3 :** j = j+1 mod L
**Étape 3.1.1.1.4:** k = k+1
**Étape 3.1.1.2.4 :** $d_{s+1}$ = 0

**Étape 3.1.1.3 :** b = S(b)          (CARRE)
**Étape 3.1.1.4 :** s = s+1

**Étape 3.2 :** Si FinM() alors :

**Étape 3.2.1 :** Si k $\neq$ 0 alors :

**Étape 3.2.1.1 :** a[H[i]] = M(a[H[i]],R[i])          (MULT)
**Étape 3.2.1.2 :** i = i+1 mod L
**Étape 3.2.1.3:** k = k-1

**Étape 4 :** Tant que k $\neq$ 0 faire :

**Étape 4.1 :** Si FinM() alors :

**Étape 4.1.1 :** a[H[i]] = M(a[H[i]],R[i])          (MULT)
**Étape 4.1.2 :** i = i+1 mod L
**Étape 4.1.3 :** k = k-1

**Étape 5 :** Tant que FinS() = FAUX OU FinM() = FAUX faire :

**Étape 5.1 :** RIEN

**Étape 6 :** b = S(a[1]) (CARRE) // calcul de a[1]$^2$

**Étape 7 :** b = M(a[1],b) (MULT) // calcul de a[1]$^3$

**Étape 8 :** Retourner M(a[0],b) (MULT) // résultat = a[0]×a[1]$^3$

**Algorithme A10 - "Square & Multiply", parallélisé, de droite à gauche à fenêtre glissante de 2 bits, avec opérations factices)**

**Entrée :** *un message m entier un exposant d entier de v+1 bits tel que d = (0 d$_{v-1}$ d$_{v-2}$.... d$_0$)$_2$ (avec d$_v$=0)*
**Requiert :** *quatre registres a[0], a[1], b et x de la taille du message m,* et *L registres R de la taille du message m : R[0] à R[L-1], avec L ≥ 1 H un tableau de L bits*
**Sortie :** *m$^d$*

**Étape 1:** a[0] = 1; a[1] = 1 ; b = m; s = 0

**Étape 2 :** i,j,k = 0,0,0

**Étape 3 :** Tant que s < v faire :

    **Étape 3.1 :** Si FinS() alors :

        **Étape 3.1.1 :** Si d$_s$ = 0 OU k ≠ L alors :

            **Étape 3.1.1.1 :** Si d$_s$ = 1

                **Étape 3.1.1.1.1 :** R[j] = b
                **Étape 3.1.1.1.2 :** H[j] = d$_{s+1}$
                **Étape 3.1.1.1.3 : j** = j+1 mod L
                **Étape 3.1.1.1.4:** k = k+1
                **Étape 3.1.1.1.4:** d$_{s+1}$ = 0

            **Étape 3.1.1.3 :** b = S(b)        (CARRE)
            **Étape 3.1.1.4 :** s = s+1

        **Étape 3.1.2 :** Sinon faire :

            **Étape 3.1.2.1 :** x = S(b)

    **Étape 3.2 :** Si FinM() alors :

        **Étape 3.2.1 :** Si k≠ 0 alors :

            **Étape 3.2.1.1 :** a[H[i]] = M(a[H[i]], R[i])     (MULT)
            **Étape 3.2.1.2 :** i = i+1 mod L
            **Étape 3.2.1.3 :** k = k-1

        **Étape 3.2.2 :** Sinon faire :

            **Étape 3.2.2.1 :** x = a[H[i]] = M(a[H[i]], R[i])    (MULT)

**Étape 4 :** Tant que k≠ 0 faire :

    **Étape 4.1 :** Si FinM() alors :

        **Étape 4.1.1 :** a[H[i]] = M(a[H[i]],R[i]) (MULT)
        **Étape 4.1.2 :** i = i+1 mod L
        **Étape 4.1.3 :** k = k-1

**Étape 5 :** Tant que FinS() = FAUX OU FinM() = FAUX faire :

**Étape 5.1 :** RIEN

**Étape 6 :** b = S(a[1])        (CARRE)        // calcul de a[1]$^2$
**Étape 7 :** b = M(a[1],b)       (MULT)        // calcul de a[1]$^3$
**Étape 8 :** Retourner M(a[0],b)       (MULT)        // résultat = a[0]$\times$a[1]$^3$

**Algorithme A11 - "Square & Multiply", parallélisé, de droite à gauche à fenêtre glissante de w bits**

**Entrée :** *un message m entier*
*un exposant d entier de v+w-1 bits tel que d = (0...0 $d_{v-1}$ $d_{v-2}$.... $d_0$)$_2$ (avec $d_v$=0)*
**Requiert :** $2^{w-1}$ *registres a[0], a[1], ..., a[$2^{w-1}$-1] et un registre b, de la taille du message m, et*
*L registres R de la taille du message m : R[0] à R[L-1], avec L $\geq$ 1*
*H un tableau de L nombres de w-1 bits*
**Sortie :** *m$^d$*

**Étape 1 :** Pour i de 0 à $2^{w-1}$ faire :

        **Étape 1.1 :** a[i] = 1

**Étape 2 :** b = m; s = 0
**Étape 3 :** i,j,k = 0,0,0
**Étape 4 :** Tant que s < v faire :

        **Étape 4.1 :** Si FinS() alors :

**Étape 4.1.1 :** Si $d_s$ = 0 OU k $\neq$ L alors :

        **Étape 4.1.1.1 :** Si $d_s$ = 1 alors :

            **Étape 4.1.1.1.1 :** R[j] = b
            **Étape 4.1.1.1.2 :** H[j] = ($d_{s+w-1}$ ... $d_{s+1}$)$_2$
            **Étape 4.1.1.1.3 :** j = j+1 mod L
            **Étape 4.1.1.1.4 :** ($d_{s+w-1}$ ... $d_{s+1}$)$_2$ = (0 ... 0)
            **Étape 4.1.1.1.5:** k = k+1

        **Étape 4.1.1.2 :** b = S(b)        (CARRE)
        **Étape 4.1.1.3 :** s = s+1

**Étape 4.2 :** Si FinM() alors :

        **Étape 4.2.1 :** Si k $\neq$ 0 alors :

            **Étape 4.2.1.1 :** a[H[i]] = M(a[H[i]], R[i])        (MULT)
            **Étape 4.2.1.2 :** i = i+1 mod L
            **Étape 4.2.1.3 :** k = k-1

**Étape 5 :** Tant que k $\neq$ 0 faire :

        **Étape 5.1 :** Si FinM() alors :

            **Étape 5.1.1 :** a[H[i]] = M(a[H[i]],R[i])        (MULT)
            **Étape 5.1.2 :** i = i+1 mod L
            **Étape 5.1.3:** k = k-1

**Étape 6 :** Tant que FinS() = FAUX OU FinM() = FAUX faire :

**Étape 6.1 :** RIEN

**Étape 7 :** Pour i de 1 à $2^{w-1}$ -1 faire:

**Étape 7.1 :** b = 1
**Étape 7.2 :** k = 2i+1; s = w-1
**Étape 7.3 :** Tant que s >=0 faire :            // (b = $a[i]^{2i+1}$)

 **Étape 7.3.1 :** b = S(b)        (CARRE)
 **Étape 7.3.2 :** Si $k_s$ = 1 alors :

  **Étape 7.3.2.1 :** b = M(b,a[i])         (MULT)

 **Étape 7.3.3 :** s = s-1

**Étape 7.4 :** a[0] = M(b,a[0])          (MULT)

**Étape 8 :** Retourner a[0]

$k_s$ représentant le bit de rang s du nombre k

Annexe III (faisant partie intégrante de la description)

$$Q_1 = \begin{vmatrix} 0 & 1 & 0 \\ 1 & 1 & 0 \\ 0 & 1 & 1 \\ 0 & 0 & 1 \\ 0 & 0 & 0 \\ 0 & 0 & 0 \\ 0 & 0 & 1 \\ 0 & 0 & 1 \end{vmatrix}$$

$$Q_2 = \begin{vmatrix} 0 & 1 & 0 \\ 1 & 1 & 0 \\ \mathbf{0} & \mathbf{1} & \mathbf{1} \\ \mathbf{1} & \mathbf{1} & \mathbf{1} \\ 0 & 1 & 1 \\ 0 & 0 & 1 \\ 0 & 0 & 0 \\ 0 & 0 & 0 \\ \mathbf{0} & \mathbf{0} & \mathbf{1} \\ \mathbf{0} & \mathbf{0} & \mathbf{1} \\ 0 & 0 & 1 \\ 0 & 0 & 1 \end{vmatrix}$$

$$Q_3 = \begin{vmatrix} 0 & 1 & 0 \\ 1 & 1 & 0 \\ \mathbf{0} & \mathbf{1} & \mathbf{1} \\ \mathbf{1} & \mathbf{1} & \mathbf{1} \\ \mathbf{0} & \mathbf{1} & \mathbf{1} \\ \mathbf{1} & \mathbf{1} & \mathbf{1} \\ 0 & 1 & 1 \\ 0 & 0 & 1 \\ 0 & 0 & 0 \\ 0 & 0 & 0 \\ \mathbf{0} & \mathbf{0} & \mathbf{1} \\ \mathbf{0} & \mathbf{0} & \mathbf{1} \\ \mathbf{0} & \mathbf{0} & \mathbf{1} \\ \mathbf{0} & \mathbf{0} & \mathbf{1} \\ 0 & 0 & 1 \\ 0 & 0 & 1 \end{vmatrix}$$

Annexe IV (faisant partie intégrante de la description)

$$Q = \begin{vmatrix} 0 & 0 & 0 \\ 0 & 0 & 1 \\ 0 & 0 & 1 \\ 1 & 1 & 0 \\ 1 & 1 & 1 \\ 0 & 1 & 1 \\ 0 & 1 & 0 \\ 0 & 1 & 1 \end{vmatrix}$$

## Revendications

1. Procédé de calcul itératif d'exponentiation d'une donnée (m) de grande taille par un exposant (d) formé d'un certain nombre de bits ($d_s$), le procédé étant mis en oeuvre dans un dispositif électronique (DV1, DV2) comprenant un bloc de calcul d'élévation au carré d'une variable de grande taille ,un bloc de calcul de multiplication (SM1, SM2) de variables de grande taille et une mémoire tampon (R) de stockage temporaire de résultats fournis par le circuit d'élévation au carré, le procédé comprenant, des étapes consistant à :

   tant que la mémoire tampon (R) n'est pas pleine de résultats non utilisés par le bloc de multiplication et si le bloc d'élévation au carré est inactif, déclencher un calcul par le bloc d'élévation au carré pour chaque bit de l'exposant, et si le bit de l'exposant correspondant est à un, stocker le résultat fourni par le bloc d'élévation au carré dans la mémoire tampon, en association avec la valeur d'un groupe d'un certain nombre de bits consécutifs suivant le bit à un de l'exposant, et mettre à zéro tous les bits du groupe dans l'exposant,
   tant que la mémoire tampon contient un résultat d'élévation au carré non utilisé par le bloc de multiplication et si le bloc de multiplication est inactif, déclencher un calcul de multiplication par le bloc de multiplication du résultat d'élévation au carré non utilisé par un résultat de multiplication mémorisé pour la valeur du groupe associé au résultat d'élévation au carré et mémoriser le résultat de la multiplication pour la valeur du groupe, et combiner les résultats de multiplication mémorisés pour les groupes en élevant les résultats de multiplication mémorisés à la puissance deux fois la valeur du groupe plus un et en multipliant entre eux les résultats des élévations obtenus.

2. Procédé selon la revendication 1, comprenant un déclenchement de calcul factice par le bloc d'élévation au carré (SB1, SB2), si la mémoire tampon est pleine (R), si le bit ($d_s$) correspondant de l'exposant (d) est à 1, et si le bloc d'élévation au carré est inactif.

3. Procédé selon la revendication 1 ou 2, comprenant un déclenchement de calcul factice par le bloc de multiplication (SM1, SM2) si la mémoire tampon (R) est vide, et si le bloc de multiplication est inactif.

4. Procédé selon la revendication 1, dans lequel tous les résultats fournis par les blocs d'élévation au carré (SB1, SB2) et de multiplication (SM1, SM2) sont utilisés pour l'obtention du résultat de l'exponentiation.

5. Procédé selon l'une des revendications 1 à 4, dans lequel plusieurs résultats fournis par le bloc d'élévation au carré (SB1, SB2), sont stockés dans la mémoire tampon (R).

6. Procédé selon l'une des revendications 1 à 5, dans lequel la mémoire tampon (R) est gérée de manière cyclique, avec un indice d'écriture (j), un indice de lecture (i) et un compteur (k) de résultats non utilisés.

7. Procédé selon l'une des revendications 1 à 6, dans lequel la mémoire tampon (R) est configurée pour stocker trois à cinq résultats fournis par le bloc d'élévation au carré (SB1, SB2).

8. Procédé selon l'une des revendications 1 à 7, dans lequel les calculs réalisés par les blocs d'élévation au carré (SB2) et de multiplication (SM2) sont des opérations modulaires.

9. Dispositif électronique (DV1, DV2) comprenant un processeur (PROC) configuré pour calculer une exponentiation d'une donnée de grande taille (m) par un exposant (d), un bloc de calcul d'élévation au carré (SB1, SB2) d'une variable de grande taille, et un bloc de calcul de multiplication (SM1, SM2) de variables de grande taille, **caractérisé en ce qu'**il comprend une mémoire tampon (R) pouvant stocker plusieurs résultats fournis par le bloc d'élévation au carré, le dispositif étant configuré pour mettre en oeuvre le procédé selon l'une des revendications 1 à 8.

10. Dispositif selon la revendication 9, dans lequel la mémoire tampon (R) est configurée pour stocker trois à cinq résultats fournis par le bloc d'élévation au carré (SB1, SB2).

11. Dispositif selon la revendication 9 ou 10, dans lequel les blocs d'élévation au carré (SB1, SB2) et de multiplication (MB1, MB2) comprennent chacun un coprocesseur de type à unité centrale programmable, ou un coprocesseur entièrement hardware de type machine d'état, ou bien sont réalisés chacun par une tache exécutée de manière indépendante d'un programme principal, les taches et le programme principal étant exécutés par le processeur (PROC) de type multi-coeur.

**Patentansprüche**

1. Verfahren zur iterativen Berechnung der Potenzierung eines großen Datums (m) mit einem aus einer bestimmten Anzahl von Bits ($d_s$) gebildeten Exponenten (d), wobei das Verfahren in einer elektronischen Vorrichtung (DV1, DV2) eingesetzt wird, umfassend einen Block zur Berechnung der Quadrierung einer großen Variablen, einen Block zur Berechnung der Multiplikation (SM1, SM2) von großen Variablen und einen Pufferspeicher (R) zur vorübergehenden Speicherung von Ergebnissen, die von der Quadrierschaltung geliefert werden, wobei das Verfahren die folgenden Schritte umfasst:

solange der Pufferspeicher (R) nicht voll mit Ergebnissen ist, die nicht vom Multiplikationsblock verwendet werden, und wenn der Quadrierungsblock nicht aktiv ist, Auslösen einer Berechnung durch den Quadrierungsblock für jedes Bit des Exponenten, und wenn das Bit des entsprechenden Exponenten auf Eins ist, Speichern des vom Quadrierungsblock gelieferten Ergebnisses im Pufferspeicher, in Verbindung mit dem Wert einer Gruppe einer bestimmten Anzahl von aufeinander folgenden Bits nach dem Bit auf Eins des Exponenten, und Setzen aller Bits der Gruppe im Exponenten auf Null,
solange der Pufferspeicher ein Quadrierungsergebnis enthält, das nicht vom Multiplikationsblock verwendet wird, und wenn der Multiplikationsblock nicht aktiv ist, Auslösen einer Multiplikationsberechnung durch den Multiplikationsblock zum Multiplizieren des nicht verwendeten Quadrierungsergebnisses mit einem Multiplikationsergebnis, das für den Wert der mit dem Quadrierungsergebnis assoziierten Gruppe gespeichert ist, und Speichern des Ergebnisses der Multiplikation für den Wert der Gruppe, und
Kombinieren der für die Gruppen gespeicherten Multiplikationsergebnisse, indem die gespeicherten Multiplikationsergebnisse mit zwei Mal dem Wert der Gruppe plus Eins potenziert werden und die erhaltenen Ergebnisse der Potenzierungen untereinander multipliziert werden.

2. Verfahren nach Anspruch 1, umfassend eine Auslösung einer Dummy-Berechnung durch den Quadrierungsblock (SB1, SB2), wenn der Pufferspeicher (R) voll ist, wenn das Bit ($d_s$), das dem Exponenten (d) entspricht, auf 1 ist, und wenn der Quadrierungsblock nicht aktiv ist.

3. Verfahren nach Anspruch 1 oder 2, umfassend eine Auslösung einer Dummy-Berechnung durch den Multiplikationsblock (SM1, SM2), wenn der Pufferspeicher (R) leer ist, und wenn der Multiplikationsblock nicht aktiv ist.

4. Verfahren nach Anspruch 1, bei dem alle Ergebnisse, die von den Blöcken zur Quadrierung (SB1, SB2) und zur Multiplikation (SM1, SM2) geliefert werden, zum Erhalten des Potenzierungsergebnisses verwendet werden.

5. Verfahren nach einem der Ansprüche 1 bis 4, bei dem mehrere vom Quadrierungsblock (SB1, SB2) gelieferte Ergebnisse im Pufferspeicher (R) gespeichert werden.

6. Verfahren nach einem der Ansprüche 1 bis 5, bei dem der Pufferspeicher (R) auf zyklische Weise verwaltet wird, mit einem Schreibindex (j), einem Leseindex (i) und einem Zähler (k) der nicht verwendeten Ergebnisse.

7. Verfahren nach einem der Ansprüche 1 bis 6, bei dem der Pufferspeicher (R) konfiguriert ist, um drei bis fünf vom Quadrierungsblock (SB1, SB2) gelieferte Ergebnisse zu speichern.

**8.** Verfahren nach einem der Ansprüche 1 bis 7, bei dem die Berechnungen, die von den Blöcken zur Quadrierung (SB2) und zur Multiplikation (SM2) durchgeführt werden, modulare Operationen sind.

**9.** Elektronische Vorrichtung (DV1, DV2), umfassend einen Prozessor (PROC), der konfiguriert ist, um eine Potenzierung eines großen Datums (m) mit einem Exponenten (d) zu berechnen, einen Block zur Berechnung der Quadrierung (SB1, SB2) einer großen Variablen, und einen Block zur Berechnung der Multiplikation (SM1, SM2) von großen Variablen,
dadurch gekennzeichnet, dass sie einen Pufferspeicher (R) umfasst, der mehrere vom Quadrierungsblock gelieferte Ergebnisse speichern kann, wobei die Vorrichtung konfiguriert ist, um das Verfahren nach einem der Ansprüche 1 bis 8 durchzuführen.

**10.** Vorrichtung nach Anspruch 9, bei der der Pufferspeicher (R) konfiguriert ist, um drei bis fünf vom Quadrierungsblock (SB1, SB2) gelieferte Ergebnisse zu speichern.

**11.** Vorrichtung nach Anspruch 9 oder 10, bei der die Blöcke zur Quadrierung (SB1, SB2) und zur Multiplikation (MB1, MB2) jeweils einen Coprozessor vom Typ mit programmierbarer Zentraleinheit oder einen Coprozessor, ganz Hardware, vom Typ Zustandsmaschine umfassen oder auch jeweils durch eine Aufgabe durchgeführt werden, die auf unabhängige Weise von einem Hauptprogramm erfolgt, wobei die Aufgaben und das Hauptprogramm vom Prozessor (PROC) vom Typ Mehrkern durchgeführt werden.

**Claims**

**1.** A method for performing an iterative calculation of exponentiation of a large datum (m) by an exponent (d) formed of a certain number of bits (ds), the method being implemented in an electronic device (DV1, DV2) comprising a calculation block for squaring a large variable, a calculation block (SM1, SM2) for multiplying large variables and a buffer memory (R) for temporarily storing results provided by the squaring circuit, the method comprising steps of:

while the buffer memory (R) is not full of results not used by the multiplication block and if the squaring block is inactive, triggering a calculation by the squaring block for each bit of the exponent, and if the bit of the corresponding exponent is on one, storing the result provided by the squaring block in the buffer memory, in association with the value of a group of a certain number of consecutive bits following the bit on one of the exponent, and resetting to zero all the bits of the group in the exponent,
while the buffer memory contains a squaring result not used by the multiplication block and if the multiplication block is inactive, triggering a multiplication calculation by the multiplication block for multiplying the unused squaring result by a multiplication result stored for the value of the group associated with the squaring result and storing the result of the multiplication for the value of the group, and
combining the multiplication results stored for the groups by raising the multiplication results stored to the power of two times the value of the group plus one and by multiplying among themselves the results of the raising operations obtained.

**2.** Method according to claim 1, comprising triggering a dummy calculation by the squaring block (SB1, SB2), if the buffer memory is full (R), if the corresponding bit ($d_s$) of the exponent (d) is on 1, and if the squaring block is inactive.

**3.** Method according to claim 1 or 2, comprising triggering a dummy calculation by the multiplication block (SM1, SM2) if the buffer memory (R) is empty and if the multiplication block is inactive.

**4.** Method according to claim 1, wherein all the results provided by the squaring (SB1, SB2) and multiplication (SM1, SM2) blocks are used to obtain the result of the exponentiation.

**5.** Method according to one of the claims 1 to 4, wherein several results provided by the squaring block (SB1, SB2), are stored in the buffer memory (R).

**6.** Method according to one of the claims 1 to 5, wherein the buffer memory (R) is managed in a cyclical manner, with a write index (j), a read index (i) and a counter (k) of unused results.

**7.** Method according to one of the claims 1 to 6, wherein the buffer memory (R) is configured to store three to five results provided by the squaring block (SB1, SB2).

8.  Method according to one of the claims 1 to 7, wherein the calculations performed by the squaring (SB2) and multiplication (SM2) blocks are modular operations.

9.  An electronic device (DV1, DV2) comprising a processor (PROC) configured to calculate an exponentiation of a large datum (m) by an exponent (d), , a calculation block (SB1, SB2) for squaring a large variable, a calculation block (SM1, SM2) for multiplying large variables,
    **Characterized in that** it comprises a buffer memory (R) being able to store several results provided by the squaring block, the device being configured to implement the method according to one of the claims 1 to 8.

10. Device according to claim 9, wherein the buffer memory (R) is configured to store three to five results provided by the squaring block (SB1, SB2).

11. Device according to claim 9 or 10, wherein the squaring (SB1, SB2) and multiplication (MB1, MB2) blocks each comprise a coprocessor of programmable central unit type, or a fully hardware coprocessor of state machine type, or are each performed by a task executed independently of a main program, the tasks and the main program being executed by the multicore-type processor (PROC).

Fig. 1
(Art Antérieur)

Fig. 2
(Art Antérieur)

Fig. 3
(Art Antérieur)

Fig. 4A
(Art Antérieur)

Fig. 4B
(Art Antérieur)

Fig. 5

Fig. 6

Fig. 7

Fig. 8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 03083645 A
- US 7742595 B
- EP 2492804 A
- US 20120221618 A

**Littérature non-brevet citée dans la description**

- **B. CHEVALLIER-MAMES ; M. CIET ; M. JOYE.** Low-Cost Solutions for Preventing Simple Side-Channel Analysis: Side-Channel Atomicity. *IEEE Transactions on Computers,* Juin 2004, vol. 53 (6), 760-768
- Distinguishing Multiplications from Squaring Operations. **F. AMIEL ; B. FEIX ; M. TUNSTALL ; C. WHELAN ; W. MARNANE.** Selected Areas in Cryptography, volume 5381 of Lecture Notes in Computer Science. Springer, 2008, vol. 5381, 346-360
- **ANSARI B et al.** Parallel scalar multiplication for elliptic curve cryptosystems. *Communication, Circuits and Systems, 2005, Proceedings 2005 International Conference in Honk Kong, China,* 27 Mai 2005, vol. 1, 71-72